# EUROPEAN PATENT SPECIFICATION

(11) **EP 4 392 760 B1**
(45) Date of publication and mention of the grant of the patent: **30.09.2026**
(21) Application number: 22772428.3
(22) Date of filing: 25.08.2022
(51) Int. Cl.: G01N 21/21, G01J 4/04

(54) **DEVICE AND METHOD FOR POLARIMETRIC IMAGING**
VORRICHTUNG UND VERFAHREN ZUR POLARIMETRISCHEN BILDGEBUNG
DISPOSITIF ET PROCÉDÉ D'IMAGERIE POLARIMÉTRIQUE

(30) Priority: 26.08.2021 EP 21306156
(43) Date of publication of application: 03.07.2024
(73) Proprietor: Université de Strasbourg, 67000 Strasbourg (FR); Centre National de la Recherche Scientifique, 75016 Paris (FR)
(72) Inventor: ZALLAT, Jihad, 67540 Ostwald (FR); HEINRICH, Christian, 67400 Illkirch-Graffenstaden (FR)
(74) Representative: IPAZ
(86) International application number: PCT/EP2022/073652
(87) International publication number: WO 2023/025877

(56) References cited:
- EP-A1- 3 798 608
- WO-A1-2019/159583
- US-A1- 2018 139 365
- US-A1- 2018 292 310
- US-A1- 2021 271 061
- SWAMI M K ET AL: "Backscattering Mueller matrix measurement scheme using the same polarizing analyzing optics", JOURNAL OF OPTICS, INSTITUTE OF PHYSICS PUBLISHING, BRISTOL GB, vol. 15, no. 3, 1 March 2013 (2013-03-01), pages 35709, XP020242372, ISSN: 2040-8986, DOI: 10.1088/2040-8978/15/3/035709

## Description

### Field of the Invention

The present invention relates to a device for polarimetric imaging. The present invention also relates to a method for polarimetric imaging implemented by such a device.

Without being limitative, the field of the invention is that of polarimetric imaging of objects in order to obtain information on their physical properties.

### Background of the Invention

Polarimetric imaging allows for the imaging of objects or scenes by taking advantage of the specific properties of polarized light used for illuminating the object. The polarization state of the light acquired by the imaging device is analyzed after having interacted with the object or the scene.

This analysis permits to obtain the Stokes vectors describing the degree of polarization of the detected light. If the object or scene is illuminated by polarized light, then the Mueller matrix associated with the object or the scene may be obtained by polarimetric techniques. The Mueller matrix describes the change in the intensity and the state of polarization of partially or fully polarized as well as unpolarized light during reflection on, refraction, or transmission through the object or the scene. The Mueller matrix thus describes the transformation of the Stokes vector of the incident light into the Stokes vector of the reflected, refracted, or transmitted light, thereby describing the light-matter interaction of the incident light with the measured object or scene.

Polarimetric measurement techniques may be implemented for the determination of physical properties of surfaces or objects, such as birefringence, dichroism, or depolarization.

Common polarimeters include a polarization generator, e.g., a polarization filter, to produce a light beam of a known polarization state, and a polarization analyzer to select a particular polarization component in the output light beam. The polarization orientations of the polarization filters and analyzers may be spatially, spectrally or temporally modulated.

For example, rotating retarders may be employed with the filters and/or analyzers. However, the orientations need to be adjusted between each of the measurements.

In another example, the sensor may be used with a modulated analyzer grid such that different regions of the sensor receive differently polarized light. However, in this case, only a part of the sensor is used to image the object under test.

The patent application WO2019/159583 A1 describes a polarimetric observation device comprising a light source unit and a polarization detector. Each light source has its own polarizer each with a different polarization angle. The polarization detector consists of a sensitive surface, each pixel of the sensitive surface being equipped with a polarization analyzer. A group of pixels (for example, four pixels) has the same polarization analyzers, i.e., set with the same polarisation transmission axis.

The patent application US2018/139365 A1 describes a polarimetric imaging device, comprising a plurality of emitters comprising polarizers and a plurality of polarization cameras comprising analyzers, wherein the transmitters and cameras may be arranged in the same plane. In an example, five units of the imaging device respectively group three transmitters and three polarization cameras. The respective polarizers and analyzers have different polarization axes.

### Summary of the Invention

The invention is defined by the device of claim 1 and by the method of claim 8.

According to an aspect of the present invention, there is provided a device for polarimetric imaging of an object, the device comprising at least three imaging elements, each imaging element comprising:
- a light source,
- an imaging sensor, and
- one single fixed polarization filter positioned in front of both the light source and the imaging sensor such that the light source and the imaging sensor are on the same side of the polarization filter,

wherein the light sources and the imaging sensors are arranged for illuminating and imaging, respectively, essentially the same field of view on the object, and
wherein the at least three imaging elements are configured to produce light having a particular polarization state which is different for each imaging element, to illuminate the object with light having different polarization states, to receive the light from the illuminated object, and to analyze the polarization states of the received light, in order to acquire at least nine polarization images of the object, the device further comprising an image processing unit configured to determine a Mueller matrix associated with the object from the at least nine polarization images.

In the following description, the term "object" is to be understood as to encounter as large variety of objects or scenes to be imaged or measured, such as structured or rough surfaces of machined work pieces, biological samples or tissues like human skin, etc.

In general, a Stokes vector comprises four Stokes parameters. In order to determine the Stokes parameters forming each of the two Stokes vectors describing the incident light on one hand and the transmitted or reflected light on the other hand, at least four measurements with different polarizations are necessary.

In particular configurations (e.g., in a backscattering configuration) with symmetric polarimetric properties of the object, three measurements with different polarizations are sufficient to determine the Stokes vector, and the Mueller matrix is a 3x3 matrix. Therefore, nine images of the object, each with different combinations of polarization states of the input and the output light, are necessary to determine the Mueller matrix linking the 3x1 input Stokes vector to the 3x1 output Stokes vector.

In other configurations, the Mueller matrix is a 4x4 matrix, and four Stokes parameters for the incident and the reflected or transmitted light are necessary to compute the Mueller matrix.

The device according to the present invention represents a computational, non-invasive imaging apparatus configured to obtain the polarimetric parameters, i.e., the Mueller matrix, of an object in each pixel of the image.

The Mueller matrix is very useful to determine the polarization characteristics of the measured object, such as depolarization, birefringence, and dichroism. These polarization properties may be exploited in order to deduce information on the nature of the measured object or surface, such as microscopic anisotropic structures. For example, the birefringence of biological tissues (e.g., human skin) gives information about the structure of collagen fibers.

All the imaging sensors and light sources of the device point to the same zone or field of view on the object. Since the light source and the imaging sensor of one imaging element are on the same side of the polarization filter, the imaging sensors receive backscattered light from the object through the same polarization filter positioned in front of the corresponding light sources. Thanks to the implementation of at least three imaging sensors, e.g., at least three color cameras, for the acquisition of at least three images of the object illuminated with light having a particular polarization state, the whole surface of one imaging sensor is used for one of these images. The resolution of the device is thus increased with respect to devices implementing shared detecting surfaces for more than one polarization. Also, these at least three images of the object as well as the three color bands RGB may be acquired simultaneously. The device represents a complete Mueller polarimeter with integrated, fixed polarizers, allowing for fast measurements.

The device according to the present invention allows for the measurement of the polarimetric spectral or monochrome signature of an object. Such an object may be, for example, human skin or other tissues, or a surface of a manufactured object. The device according to the present invention may also be operated as a digital dermatoscope with high resolution, allowing for a powerful digital zoom.

The imaging sensors of the device are advantageously equipped with an imaging lens or objective. An additional lens or objective may be placed in front of the imaging sensors, common to all of them.

Each of the single elements of the device according to the present invention may have a dimension in the range of 1 cm², for example. Advantageously, the device may appear as a hand-held apparatus connected to a computer.

The device according to the present invention has low production costs and can be conveniently implemented using commercially available components.

According to a preferred embodiment, the device may further comprise at least one principal imaging sensor arranged centrally with respect to the imaging elements.

This imaging sensor may be used to acquire a standard image of the object, the object being illuminated by one or more of the light sources of the device.

Advantageously, the device according to the present invention may further comprise at least two unpolarized light sources arranged for illuminating essentially the same field of view/zone on the object, the device being configured to acquire at least two unpolarized images of the object.

These unpolarized light sources, illuminating a zone on the object from slightly different angles, may be employed to produce stereo images of the object.

According to embodiments, the light sources may comprise white-light sources and/or RGB light sources.

The light sources preferably include light-emitting diodes (LEDs).

According to embodiments, the imaging sensors of the device according to the present invention may include CMOS sensors.

The imaging sensors may be of monochrome or multi-wavelengths type.

In the latter case, a Bayer filter may be used with the sensor to filter RGB channels.

According to an embodiment, the imaging sensors and the light sources may be arranged on a common surface.

Such an assembly facilitates the orientation of these elements such that they all point to the same zone on the object or field of view.

For example, the common surface may be a polyhedral surface.

Each imaging element, unpolarized light source, and the principal imaging sensor may be arranged on one of the faces of the polyhedral surface.

According to another aspect of the present invention, there is provided a method for polarimetric imaging of an object, the method being implemented by a polarimetric imaging device according to the invention, the method comprising the following steps:
- sequential illumination of the object by each of the at least three imaging elements, configured to realize at least three illuminations of the object with light having different polarization states,
- acquisition, by each of the at least three imaging elements, of an image of the object with the at least three illuminations, in order to obtain at least nine polarization images of the object, each polarization image corresponding to a different combination of illumination and imaging polarization states,
- determination, by the image processing unit, of a Mueller matrix from the at least nine polarization images, in order to obtain information on physical properties of the object.

This polarimetry measurement technique, implemented by means of the device according to the invention, allows for fast, complete, and high-resolution polarimetry measurements.

No spatial or temporal modulation of the polarization of the incident or captured light is necessary. The method uses fixed polarizers and entire imaging sensors, e.g., cameras, for the acquisition of each image.

Preferably, thanks to the presence of several imaging sensors, the acquisitions by each of the imaging sensors of the at least three imaging elements are realized simultaneously. They may also be realized sequentially.

According to a preferred embodiment, the method may further comprise the following steps:
- illumination of the object by at least one light source,
- acquisition, by the central imaging sensor, of an image of the object.

These steps allow for the acquisition of a standard image of the object, which may serve for the determination of the element m00 (first row, first column element) of the Mueller matrix.

Alternatively, element m00 may be estimated by determining a mean intensity value from the at least nine polarization images.

According to a variant, the method may further comprise the following steps:
- sequential unpolarized illumination of the object by at least two unpolarized light sources,
- acquisition, by the principal imaging sensor, of an image of the object corresponding to each unpolarized illumination, to obtain at least one pair of images, and
- determination, from the at least one pair of images, of a 3D structure of the object.

These method steps, implemented as such, may be considered as a generalized stereo photometry technique. Combined with the polarimetry measurement technique according to the present invention, an object may be characterized in a complete fashion, by exploiting the at least nine polarization images and the at least one pair of unpolarized images. This allows to have both the polarimetric measurement results as well as roughness measurement results obtained by stereo photometry at the same time by the same device.

Alternatively or additionally, the method may further comprise the following steps:
- illumination of the object by an unpolarized light source,
- acquisition, by at least two different imaging elements, of at least one pair of images of the object, and
- determination, from the at least one pair of images, of a 3D structure of the object.

These method steps, implemented as such, may be considered as a generalized stereo vision technique. Combined with the polarimetry measurement technique according to the present invention.

The combination of one of the stereo techniques with the polarimetry technique allows for the acquisition, with one and the same device, of the polarimetric spectral or monochrome signature and the 3D texture of an object, such as a rough surface. The fusion of these multi-modal data, from the polarization images and stereo images, leads to an enriched information of the object, including color images, polarization response, and the reconstructed 3D surface of the object.

The generalized stereo photometry and generalized stereo vision techniques, allowing for the determination of the 3D structure of a surface from polarized or unpolarized radiance measurements, may also be combined together with the polarimetry technique as indicated above, in order to validate and ensure an accurate construction of a measured surface.

The device and/or method according to aspects of the present invention may be used in several applications where the physical characteristics of objects need to be known.

In particular, the device and/or method for polarimetric imaging according to the present invention representing a computational, non-invasive imaging technique, they may be implemented in the medical domain in order to determine the nature of skin lesions, for example for determining the presence and/or extent of skin cancer. The device and/or method of the present invention may also be used in order to quantify the vitality of the skin via wrinkle measurement.

Further, the device and/or method according to the present invention may also be implemented in quality control routines, for example, in order to control the surface states of manufactured objects.

### Brief Description of the Drawings

Other advantages and features of the invention will become apparent by reference to the following detailed description of illustrative embodiments thereof, and from the accompanying drawings, wherein:
- Figure 1 schematically depicts a polarimetric imaging device in accordance with an illustrative embodiment of the invention,
- Figures 2(a) and 2(b) show different perspective views of a polarimetric imaging device in accordance with an illustrative embodiment of the invention, and

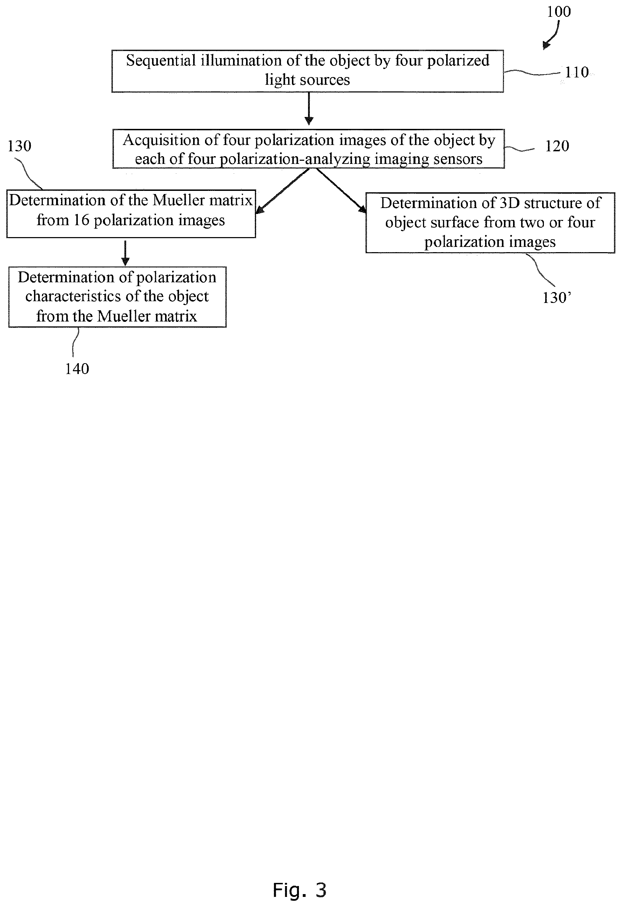

- Figure 3 schematically depicts a polarimetric imaging method in accordance with an illustrative embodiment of the invention.

### Detailed Description

It is well understood that the embodiments which will be described hereinafter are in no way limitative. Variants of the invention can be considered comprising only a selection of the characteristics described hereinafter, in isolation from the other characteristics described, if this selection of characteristics is sufficient to confer a technical advantage or to differentiate the invention with respect to the state of the prior art. This selection comprises at least one, preferably functional, characteristic without structural details, or with only a part of the structural details if this part alone is sufficient to confer a technical advantage or to differentiate the invention with respect to the state of the prior art.

In particular, all the variants and all the embodiments described can be combined together if there is no objection to this combination from a technical point of view.

In the Figures, the elements that are common to several Figures keep the same reference.

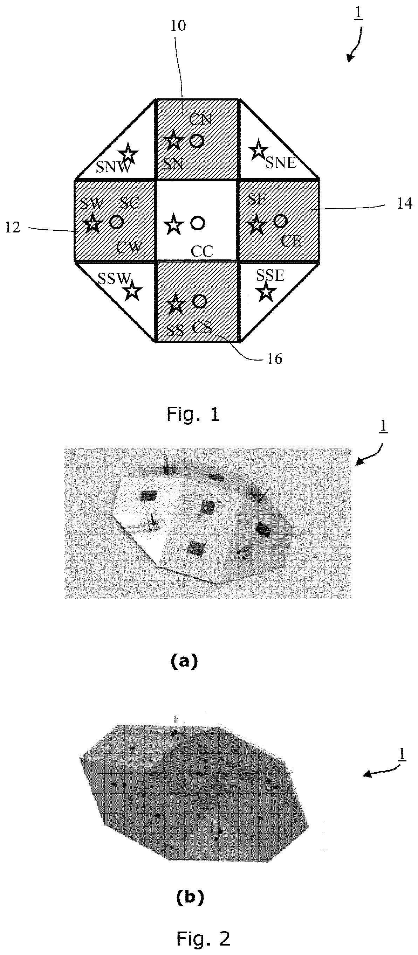

Figure 1 schematically represents a device according to an embodiment of the present invention in an exploded view.

The device 1 comprises four imaging elements 10, 12, 14, 16. Each imaging element 10, 12, 14, 16 comprises a light source SN, SW, SE, SS, an imaging sensor CN, CW, CE, CS and a fixed polarization filter (represented by the hatched areas). The polarization filters are each positioned in front of the respective light source and imaging sensor. The light source and the imaging sensor of one imaging element are arranged in essentially the same plane. Thus, light emitted by a light source SN, SW, SE, SS is polarized, and the polarization state of light received by an imaging sensor CN, CW, CE, CS of the same imaging element 10, 12, 14, 16 is analyzed through one and the same polarization filter. The light sources and imaging sensors of the imaging elements may be said polarized light sources and polarized imaging sensors, respectively.

The polarization filters are arranged such that the light emitted by each of the imaging elements has a different, a particular polarization state. For example, the polarization states may be:
- horizontal linear, vertical linear, right circular, and left circular polarization, or
- four different elliptical polarizations.

The device 1 according to the embodiment of Figure 1 further comprises a principal imaging sensor CC, arranged centrally with respect to the four imaging elements 10, 12, 14, 16. The principal imaging sensor CC is not provided with a polarization analyzer. The device 1 also comprises four supplemental, unpolarized light sources SNW, SNE, SSW, SSE. In the embodiment represented in Figure 1, the supplemental light sources SNW, SNE, SSW, SSE are arranged in radial symmetry with respect to the other components of the device 1. A central, unpolarized light source SC is arranged next to the principal imaging sensor CC.

All the light sources and imaging elements of the device 1, i.e., all the light sources and imaging sensors, are arranged such as to illuminate and image, respectively, essentially the same field of view or zone on the object. In the represented embodiment, all the elements of the device 1 (imaging elements 10, 12, 14, 16, central sensor CC, unpolarized light sources SNW, SNE, SSW, SSE, CC) are arranged on a polyhedral surface. Perspective views of this surface are shown in Figures 2(a) (view from above, interior of the device) and 2(b) (view from below, side facing the object to be measured). The faces of the polyhedral surface are all tangential to the same sphere. In Figure 2(a), imaging sensors are represented as small squares in the square faces. In Figure 2(b), faces with one point indicate the presence of a white light source (square faces), and faces with three points indicate the presence of RGB light sources (triangle faces).

The field of view or zone pointed by the imaging sensors and light sources of the device 1 may cover only a region on the object, or the whole object.

The device 1 further comprises an image processing unit in order to process images acquired by the imaging sensors.

In operation, each of the four polarized light sources SN, SW, SE, SS sequentially illuminates a region of the object with light having a particular polarization state. Each of the polarized imaging sensors CN, CW, CE, CS acquires an image of the object with the four illuminations. The acquisitions can be realized sequentially or simultaneously. Thus, sixteen images of the object are acquired, each image corresponding to a different light polarization. The images may be said polarization images.

The sixteen images are used to obtain the Stokes vectors and thus construct the Mueller matrix associated with the imaged object in each pixel of the images.

One or more pairs of unpolarized light sources may be used to illuminate the object sequentially such that one or more pairs of stereo images may be acquired.

Alternatively or additionally, several imaging sensors may simultaneously acquire an image of the object illuminated by one of the light sources.

The central unpolarized light source SC is useful for implementing the device according to the present invention in a dermatoscopic mode.

The device according to the present invention may be thus operated in different modes, namely a polarimetric mode, a generalized stereo photometry mode, a generalized stereo vision mode, and a standard camera mode.

These operation modes will appear in more detail in the following description.

A method for polarimetric imaging of an object according to embodiments of the present invention is described in the following. The method may be implemented with a device according to the present invention, for example with a device according to the embodiment represented in Figure 1.

The method 100, represented in Figure 1, comprises the following steps in the polarimetric mode.

In an illumination step 110, the object to be imaged is sequentially illuminated by each of the four polarized light sources of the imaging elements. Thus, the object is illuminated with light having four different polarization states.

In an acquisition step 120, each of the four polarization-analyzing imaging sensors of the imaging elements acquires an image of the object with each of the four illuminations such that each imaging sensors acquires four different images. Therefore, within this step, sixteen images of the object are acquired, each image corresponding to a different combination of illumination and imaging polarization states. These images may thus be called polarization images.

In a determination step 130, the Mueller matrix is determined from the sixteen polarization images, for each pixel of the images.

Additionally, an image of the object may be acquired by the principal imaging sensor. This image is useful for deducing element m00 of the Mueller matrix.

Since the four images for one particular illumination are captured from slightly different angles, these measures are transformed to the coordinate system of the central imaging sensor by projecting the plane of the camera sensor on the plane of the central camera, prior to the inversion in order to obtain the Mueller image.

An example of the implementation of determination step 130 is described in the following. Since the cameras are small and packaged closely, the device is in a quasi-backscattering configuration. When standard linear (horizontal, H, and vertical, V) polarizers and circular (right, R, and left, L) polarizers are used, the dimensions of the Mueller matrix are reduced to 3x3. The Mueller matrix M can be computed using the following equation: $M = \left(\begin{matrix}OO & \left(HO-VO\right) & \left(RO-LO\right) \\ \left(OH-OV\right) & \left(HH+VV\right) - \left(HV+VH\right) & \left(RH+LV\right) - \left(LH+RV\right) \\ \left(OR-OL\right) & \left(HR+VL\right) - \left(HL+VR\right) & \left(LL+RR\right) - \left(RL+LR\right)\end{matrix}\right) .$

Each two-letters combination stands for one measurement of the irradiance. The first letter indicates the polarization of the incident light, and the second letter indicates that the acquisition is made by the camera which has the particular polarizer in front of it.

The letter O indicates that the measurement is done using the central camera CC (without polarizer), the illumination being realized by one of the light sources.

In a next step 140, the Mueller matrix can then be used to determine the polarization characteristics of the measured object, such as depolarization, birefringence, and dichroism. These properties can then be exploited in order to deduce information on the nature of the measured object or surface.

In an illumination step of the generalized stereo photometry mode, the object is sequentially illuminated by two or four of the unpolarized light sources.

In an acquisition step, two or four images of the object are acquired, respectively corresponding to the two or four unpolarized illuminations.

In a determination step, a 3D structure, such as the roughness of a surface, is determined from one pair or from two pairs of images.

In an illumination step of the generalized stereo vision mode, the object is illuminated by an unpolarized light source.

In an acquisition step, two or four images of the object are acquired sequentially or simultaneously.

In a determination step, a 3D structure, such as the roughness of a surface, is determined from one pair or from two pairs of images.

In an alternative determination step 130', a 3D structure may be determined from two or four of the polarization images acquired in the acquisition step 120 in the polarimetric mode. The two or four polarization images may be sequentially acquired by one of the imaging elements for two or four different illuminations (generalized stereo vision mode), or they may be simultaneously acquired by two or four different imaging elements for one illumination (generalized stereo photometry mode).

The image processing according to the method of the present invention may be implemented on an integrated circuit card of the FPGA (*field-programmable gate array*) type. These microchips being very compact, they may be easily embedded in the device according the invention.

While this invention has been described in conjunction with a number of embodiments, it is evident that many alternatives, modifications, and variations would be or are apparent to those of ordinary skill in the applicable arts. Accordingly, it is intended to embrace all such alternatives, modifications, equivalents, and variations that are within the scope of this invention, which is defined by the appended claims.

## Claims

1. A device (1) for polarimetric imaging of an object, the device comprising at least three imaging elements (10, 12, 14, 16), each imaging element (10, 12, 14, 16) comprising:
- a light source (SN, SW, SE, SS),
- an imaging sensor (CN, CW, CE, CS), and
- one single fixed polarization filter positioned in front of both the light source and the imaging sensor such that the light source and the imaging sensor are on the same side of the polarization filter,
wherein the light sources (SN, SW, SE, SS) and the imaging sensors (CN, CW, CE, CS) are arranged for illuminating and imaging, respectively, essentially the same field of view on the object, and
wherein the at least three imaging elements (10, 12, 14, 16) are configured to produce light having a particular polarization state which is different for each imaging element (10, 12, 14, 16), to illuminate the object with the light, to receive the light from the illuminated object, and to analyze the polarization states of the received light, in order to acquire at least nine polarization images of the object, the whole surface of each imaging sensor being used to acquire one polarization image of the object,
the device (1) further comprising an image processing unit configured to determine a Mueller matrix associated with the object from the at least nine polarization images.

2. The device (1) according to claim 1, further comprising at least one principal imaging sensor (CC) arranged centrally with respect to the imaging elements (10, 12, 14, 16).

3. The device (1) according to claim 1 or 2, further comprising at least two unpolarized light sources (SNW, SNE, SSW, SSE), arranged for illuminating essentially the same field of view/zone on the object, the device (1) being configured to acquire at least two unpolarized images of the object.

4. The device (1) according to any of the preceding claims, wherein all the imaging sensors (CC, CN, CW, CE, CS) and the light sources (SN, SW, SE, SS, SNW, SNE, SSW, SSE) are arranged on a common surface.

5. The device (1) according to claim 4, wherein the common surface is a polyhedral surface.

6. The device (1) according to any of the preceding claims, wherein the light sources comprise white-light sources and/or RGB light sources.

7. The device (1) according to any of the preceding claims, wherein the imaging sensors comprise monochrome and/or polychrome imaging sensors.

8. A method (100) for polarimetric imaging of an object, the method being implemented by a polarimetric imaging device (1) according to any of the preceding claims, the method (100) comprising the following steps:
- sequential illumination (110) of the object by each of the at least three imaging elements (10, 12, 14, 16), configured to realize at least three illuminations of the object with light having different polarization states,
- acquisition (120), by each of the at least three imaging elements (10, 12, 14, 16), of an image of the object with the at least three illuminations, in order to obtain at least nine polarization images of the object, each polarization image corresponding to a different combination of illumination and imaging polarization states, the whole surface of each imaging sensor being used for the acquisition of one polarization image of the object,
- determination (130), by the image processing unit, of a Mueller matrix from the at least nine polarization images, in order to obtain information on physical properties of the object.

9. The method (100) according to the preceding claim, further comprising the following steps:
- illumination of the object by at least one light source,
- acquisition, by a central imaging sensor, of an image of the object.

10. The method (100) according to claim 8 or 9, implemented by a device according to any of claims 3 to 7, further comprising:
- sequential unpolarized illumination of the object by at least two unpolarized light sources,
- acquisition, by the principal imaging sensor, of an image of the object corresponding to each unpolarized illumination, to obtain at least one pair of images,
- determination, from the at least one pair of images, of a 3D structure of the object.

11. The method (100) according to any one of claims 8 to 10, implemented by a device according to any of claims 3 to 7, further comprising:
- illumination of the object by an unpolarized light source,
- acquisition, by at least two different imaging elements, of at least one pair of images of the object,
- determination, from the at least one pair of images, of a 3D structure of the object.

## Patentansprüche

1. Vorrichtung (1) zur polarimetrischen Bildgebung eines Objekts, wobei die Vorrichtung mindestens drei Bildgebungselemente (10, 12, 14, 16) umfasst, wobei jedes Bildgebungselement (10, 12, 14, 16) umfasst:
- eine Lichtquelle (SN, SW, SE, SS),
- einen bildgebenden Sensor (CN, CW, CE, CS), und
- einen einzelnen feststehenden Polarisationsfilter, der sowohl vor der Lichtquelle als auch vor dem bildgebenden Sensor angeordnet ist, derart, dass sich die Lichtquelle und der bildgebende Sensor auf derselben Seite des Polarisationsfilters befinden,
wobei die Lichtquellen (SN, SW, SE, SS) und die bildgebenden Sensoren (CN, CW, CE, CS) zum Beleuchten bzw. Abbilden im Wesentlichen desselben Sichtfelds auf dem Objekt angeordnet sind, und
wobei die mindestens drei Bildgebungselemente (10, 12, 14, 16) konfiguriert sind, um Licht mit einem bestimmten Polarisationszustand zu erzeugen, der für jedes Bildgebungselement (10, 12, 14, 16) unterschiedlich ist, das Objekt mit dem Licht zu beleuchten, das Licht von dem beleuchteten Objekt zu empfangen und die Polarisationszustände des empfangenen Lichts zu analysieren, um mindestens neun Polarisationsbilder des Objekts zu erfassen, wobei die gesamte Oberfläche jedes bildgebenden Sensors dazu verwendet wird, ein Polarisationsbild des Objekts zu erfassen,
wobei die Vorrichtung (1) ferner eine Bildverarbeitungseinheit umfasst, die konfiguriert ist, um eine dem Objekt zugeordnete Müller-Matrix aus den mindestens neun Polarisationsbildern zu bestimmen.

2. Vorrichtung (1) nach Anspruch 1, ferner umfassend mindestens einen bildgebenden Hauptsensor (CC), der zentral in Bezug auf die Bildgebungselemente (10, 12, 14, 16) angeordnet ist.

3. Vorrichtung (1) nach Anspruch 1 oder 2, ferner umfassend mindestens zwei unpolarisierte Lichtquellen (SNW, SNE, SSW, SSE), die zum Beleuchten im Wesentlichen desselben Sichtfelds/derselben Zone auf dem Objekt angeordnet sind, wobei die Vorrichtung (1) konfiguriert ist, um mindestens zwei unpolarisierte Bilder des Objekts zu erfassen.

4. Vorrichtung (1) nach einem der vorstehenden Ansprüche, wobei alle bildgebenden Sensoren (CC, CN, CW, CE, CS) und die Lichtquellen (SN, SW, SE, SS, SNW, SNE, SSW, SSE) auf einer gemeinsamen Oberfläche angeordnet sind.

5. Vorrichtung (1) nach Anspruch 4, wobei die gemeinsame Oberfläche eine polyedrische Oberfläche ist.

6. Vorrichtung (1) nach einem der vorstehenden Ansprüche, wobei die Lichtquellen Weißlichtquellen und/oder RGB-Lichtquellen umfassen.

7. Vorrichtung (1) nach einem der vorstehenden Ansprüche, wobei die bildgebenden Sensoren monochrome und/oder polychrome bildgebende Sensoren umfassen.

8. Verfahren (100) zur polarimetrischen Bildgebung eines Objekts, wobei das Verfahren durch eine polarimetrische Bildgebungsvorrichtung (1) nach einem der vorstehenden Ansprüche implementiert wird, wobei das Verfahren (100) die folgenden Schritte umfasst:
- sequenzielle Beleuchtung (110) des Objekts durch jedes der mindestens drei Bildgebungselemente (10, 12, 14, 16), die konfiguriert sind, um mindestens drei Beleuchtungen des Objekts mit Licht mit unterschiedlichen Polarisationszuständen zu realisieren,
- Erfassung (120), durch jedes der mindestens drei Bildgebungselemente (10, 12, 14, 16), eines Bildes des Objekts mit den mindestens drei Beleuchtungen, um mindestens neun Polarisationsbilder des Objekts zu erhalten, wobei jedes Polarisationsbild einer anderen Kombination von Beleuchtungs- und Bildgebungspolarisationszuständen entspricht, wobei die gesamte Oberfläche jedes bildgebenden Sensors für die Erfassung eines Polarisationsbildes des Objekts verwendet wird,
- Bestimmung (130) einer Müller-Matrix durch die Bildverarbeitungseinheit aus den mindestens neun Polarisationsbildern, um Informationen über physikalische Eigenschaften des Objekts zu erhalten.

9. Verfahren (100) nach dem vorstehenden Anspruch, ferner umfassend die folgenden Schritte:
- Beleuchtung des Objekts durch mindestens eine Lichtquelle,
- Erfassung eines Bildes des Objekts durch einen zentralen bildgebenden Sensor.

10. Verfahren (100) nach Anspruch 8 oder 9, implementiert durch eine Vorrichtung nach einem der Ansprüche 3 bis 7, ferner umfassend:
- sequenzielle unpolarisierte Beleuchtung des Objekts durch mindestens zwei unpolarisierte Lichtquellen,
- Erfassung eines Bildes des Objekts entsprechend jeder unpolarisierten Beleuchtung durch den bildgebenden Hauptsensor, um mindestens ein Paar von Bildern zu erhalten,
- Bestimmung einer 3D-Struktur des Objekts aus dem mindestens einen Paar von Bildern.

11. Verfahren (100) nach einem der Ansprüche 8 bis 10, implementiert durch eine Vorrichtung nach einem der Ansprüche 3 bis 7, ferner umfassend:
- Beleuchtung des Objekts durch eine unpolarisierte Lichtquelle,
- Erfassung, durch mindestens zwei verschiedene Bildgebungselemente, von mindestens einem Paar von Bildern des Objekts,
- Bestimmung einer 3D-Struktur des Objekts aus dem mindestens einen Paar von Bildern.

## Revendications

1. Dispositif (1) d'imagerie polarimétrique d'un objet, le dispositif comprenant au moins trois éléments d'imagerie (10, 12, 14, 16), chaque élément d'imagerie (10, 12, 14, 16) comprenant :
- une source de lumière (SN, SW, SE, SS),
- un capteur d'imagerie (CN, CW, CE, CS), et
- un seul filtre de polarisation fixe positionné à la fois devant la source de lumière et le capteur d'imagerie, de telle sorte que la source de lumière et le capteur d'imagerie sont du même côté du filtre de polarisation,
dans lequel les sources de lumière (SN, SW, SE, SS) et les capteurs d'imagerie (CN, CW, CE, CS) sont agencés pour l'éclairage et l'imagerie, respectivement, sensiblement du même champ de vision sur l'objet, et
dans lequel les au moins trois éléments d'imagerie (10, 12, 14, 16) sont configurés pour produire de la lumière ayant un état de polarisation particulier qui est différent pour chaque élément d'imagerie (10, 12, 14, 16), pour éclairer l'objet avec la lumière, pour recevoir la lumière de l'objet éclairé, et pour analyser les états de polarisation de la lumière reçue, afin d'acquérir au moins neuf images de polarisation de l'objet, l'ensemble de la surface de chaque capteur d'imagerie étant utilisé pour acquérir une image de polarisation de l'objet,
le dispositif (1) comprenant en outre une unité de traitement d'image configurée pour déterminer une matrice de Mueller associée à l'objet à partir des au moins neuf images de polarisation.

2. Dispositif (1) selon la revendication 1, comprenant en outre au moins un capteur d'imagerie principal (CC) agencé de manière centrale par rapport aux éléments d'imagerie (10, 12, 14, 16).

3. Dispositif (1) selon la revendication 1 ou 2, comprenant en outre au moins deux sources de lumière non polarisées (SNW, SNE, SSW, SSE), agencées pour éclairer sensiblement le même champ de vision/la même zone sur l'objet, le dispositif (1) étant configuré pour acquérir au moins deux images non polarisées de l'objet.

4. Dispositif (1) selon l'une quelconque des revendications précédentes, dans lequel tous les capteurs d'imagerie (CC, CN, CW, CE, CS) et toutes les sources de lumière (SN, SW, SE, SS, SNW, SNE, SSW, SSE) sont agencés sur une surface commune.

5. Dispositif (1) selon la revendication 4, dans lequel la surface commune est une surface polyédrique.

6. Dispositif (1) selon l'une quelconque des revendications précédentes, dans lequel les sources de lumière comprennent des sources de lumière blanche et/ou des sources de lumière RVB.

7. Dispositif (1) selon l'une quelconque des revendications précédentes, dans lequel les capteurs d'imagerie comprennent des capteurs d'imagerie monochromes et/ou polychromes.

8. Procédé (100) d'imagerie polarimétrique d'un objet, le procédé étant mis en œuvre par un dispositif d'imagerie polarimétrique (1) selon l'une quelconque des revendications précédentes, le procédé (100) comprenant les étapes suivantes :
- l'éclairage séquentiel (110) de l'objet par chacun des au moins trois éléments d'imagerie (10, 12, 14, 16), configuré pour réaliser au moins trois éclairages de l'objet avec de la lumière ayant des états de polarisation différents,
- l'acquisition (120), par chacun des au moins trois éléments d'imagerie (10, 12, 14, 16), d'une image de l'objet avec les au moins trois éclairages, afin d'obtenir au moins neuf images de polarisation de l'objet, chaque image de polarisation correspondant à une combinaison différente d'états de polarisation d'éclairage et d'imagerie, l'ensemble de la surface de chaque capteur d'imagerie étant utilisé pour l'acquisition d'une image de polarisation de l'objet,
- la détermination (130), par l'unité de traitement d'image, d'une matrice de Mueller à partir des au moins neuf images de polarisation, afin d'obtenir des informations sur des propriétés physiques de l'objet.

9. Procédé (100) selon la revendication précédente, comprenant en outre les étapes suivantes :
- l'éclairage de l'objet par au moins une source de lumière,
- l'acquisition, par un capteur central d'imagerie, d'une image de l'objet.

10. Procédé (100) selon la revendication 8 ou 9, mis en œuvre par un dispositif selon l'une quelconque des revendications 3 à 7, comprenant en outre :
- l'éclairage non polarisé séquentiel de l'objet par au moins deux sources de lumière non polarisées,
- l'acquisition, par le capteur d'imagerie principal, d'une image de l'objet correspondant à chaque éclairage non polarisé, pour obtenir au moins une paire d'images,
- la détermination, à partir de l'au moins une paire d'images, d'une structure 3D de l'objet.

11. Procédé (100) selon l'une quelconque des revendications 8 à 10, mis en œuvre par un dispositif selon l'une quelconque des revendications 3 à 7, comprenant en outre :
- l'éclairage de l'objet par une source de lumière non polarisée,
- l'acquisition, par au moins deux éléments d'imagerie différents, d'au moins une paire d'images de l'objet,
- la détermination, à partir de l'au moins une paire d'images, d'une structure 3D de l'objet.
